# EUROPEAN PATENT APPLICATION

(11) **EP 4 131 624 A1**
(43) Date of publication of application: **08.02.2023**
(21) Application number: 21937071.5
(22) Date of filing: 24.06.2021
(51) Int. Cl.: H01M 50/449, H01M 50/451, H01M 50/414

(54) **BINDER FOR COATING SECONDARY BATTERY SEPARATOR AND SECONDARY BATTERY COMPRISING SAME**

(30) Priority: 12.04.2021 KR 20210047159
(71) Applicant: Hansol Chemical Co., Ltd., Gangnam-gu Seoul 06169 (KR)
(72) Inventor: LEE, Go Eun, Wanju-gun, Jeollabuk-do 55321 (KR); JANG, Bo Ok, Wanju-gun, Jeollabuk-do 55321 (KR); KIM, Jin Yeong, Wanju-gun, Jeollabuk-do 55321 (KR); KIM, Gyun Tae, Wanju-gun, Jeollabuk-do 55321 (KR); OH, Sae Wook, Wanju-gun, Jeollabuk-do 55321 (KR); KIM, Chang Beom, Wanju-gun, Jeollabuk-do 55321 (KR); PARK, Ji Hye, Wanju-gun, Jeollabuk-do 55321 (KR); KWON, Se Man, Wanju-gun, Jeollabuk-do 55321 (KR)
(74) Representative: Isarpatent
(86) International application number: PCT/KR2021/007977
(87) International publication number: WO 2022/220336

(57) **Abstract**

The present disclosure relates to a binder for coating a secondary battery separator including a (meth)acrylic copolymer containing a first structural unit derived from (meth)acrylonitrile; a second structural unit derived from (meth)acrylic acid or (meth)acrylate; and a third structural unit derived from (acet)amides, and a separator for a secondary battery and a secondary battery including the same.

## Description

### [Technical Field]

The present disclosure relates to a binder for coating a secondary battery separator and a secondary battery comprising the same.

### [Background Art]

A separator for an electrochemical battery is an interlayer that enables charging and discharging of the battery by continuously maintaining ionic conductivity while isolating a positive electrode and a negative electrode within the battery. However, when the battery is exposed to a high temperature environment due to its non-ideal behavior, the separator is mechanically contracted or damaged due to melting characteristics at a low temperature. In this case, the positive electrode and the negative electrode may come into contact with each other and as a result, the battery may also be ignited. In order to overcome this problem, a technology capable of inhibiting the shrinkage of the separator and securing the stability of the battery by coating the separator with an inorganic material has been attempted.

For example, in Korean Patent Application Publication No. 10-2016-0061202, there is disclosed a separator for a lithium secondary battery in which a coating layer including an acrylic copolymer formed by polymerization of (meth)acrylate and (meth)acrylonitrile, and a polyvinyl alcohol-based compound is positioned on one surface of a substrate. However, in the above technology, the adhesive performance of the acrylic copolymer was insufficient, and thus, the polyvinyl alcohol-based compound needs to be additionally introduced.

### [Citation List]

### [Patent Documents]

Korean Patent Application Publication No. 10-2016-0061202

### [Disclosure]

### [Technical Problem]

An object of the present disclosure is to provide a binder for coating a secondary battery separator capable of greatly improving the heat resistance properties of a separator by improving adhesion and heat resistance to a porous substrate.

Another object of the present disclosure is to provide a secondary battery separator comprising the binder for coating the secondary battery separator.

Yet another object of the present disclosure is to provide a secondary battery comprising the secondary battery separator.

### [Technical Solution]

An exemplary embodiment of the present disclosure provides a binder for coating a secondary battery separator including a (meth)acrylic copolymer containing a first structural unit derived from (meth)acrylonitrile; a second structural unit derived from (meth)acrylic acid or (meth)acrylate; and a third structural unit derived from (acet)amides.

Another exemplary embodiment of the present disclosure provides a secondary battery separator including a porous substrate; and a coating layer positioned on at least one surface of the porous substrate, in which the coating layer includes a (meth)acrylic copolymer containing a first structural unit derived from (meth)acrylonitrile; a second structural unit derived from (meth)acrylic acid or (meth)acrylate; and a third structural unit derived from (acet)amides.

Yet another exemplary embodiment of the present disclosure provides a secondary battery including the secondary battery separator.

### [Advantageous Effects]

According to the present disclosure, it is possible to greatly improve the heat resistance properties of a separator by applying a binder formed by containing a (meth)acrylic copolymer to coating of a secondary battery separator to improve adhesion and heat resistance to a porous substrate.

### [Best Mode]

Hereinafter, exemplary embodiments of the present disclosure will be described in detail. However, the exemplary embodiments are illustrative, the present disclosure is not limited thereto, and the present disclosure will be only defined by the scope of the claims to be described below.

The present inventors found that a (meth)acrylic copolymer containing a first structural unit derived from (meth)acrylonitrile, a second structural unit derived from (meth)acrylic acid or (meth)acrylate, and a third structural unit derived from (acet)amides was prepared and included in a slurry for coating a porous film to coat a separator, thereby greatly improving adhesion and heat resistance of the separator, and completed the present disclosure.

### <Preparation of binder>

An exemplary embodiment of the present disclosure provides a binder for coating a secondary battery separator consisting of a (meth)acrylic copolymer containing a first structural unit derived from (meth)acrylonitrile, a second structural unit derived from (meth)acrylic acid or (meth)acrylate, and a third structural unit derived from (acet)amides.

The (meth)acrylonitrile may include acrylonitrile, methacrylonitrile, or a combination thereof.

The (meth)acrylic acid may be acrylic acid or methacrylic acid.

The (meth)acrylate may include alkali metal, alkaline earth metal, ammonium amine salt, or a combination thereof. Examples of the (meth)acrylate may include lithium acrylate, lithium methacrylate, sodium acrylate, sodium methacrylate, magnesium acrylate, magnesium methacrylate, ammonium acrylate, ammonium methacrylate, and the like, but are not limited thereto.

The structural unit derived from the (meth)acrylate may be derived from (meth)acrylic acid alkyl ester, (meth)acrylic acid perfluoroalkyl ester, and (meth)acrylate having a functional group in a side chain, for example, (meth)acrylic acid alkylester.

The (acet)amides may be acetamide or an amide-based compound.

In the present disclosure, the structural unit derived from (acet)amides is included in the copolymer in order to increase the adhesion and heat resistance of the binder. The reason for the increased adhesion and heat resistance by (acet)amides is that a glass transition temperature of the (acet)amides is higher than that of (meth)acrylonitrile and (meth)acrylic acid, and elements having high electronegativity capable of expressing cohesive force and adhesive performance such as hydrogen bonds or ionic bonds is more than those of (meth)acrylonitrile. However, due to the reactivity of (acet)amide itself and compatibility between raw materials, since the used amount of (acet)amides is increased to affect the polymerization stability and reactivity of the binder copolymer, there was a problem that the (acet)amides could not be used as a main component of the binder copolymer.

In the present disclosure, the third structural unit derived from (acet)amides is preferably included in an amount of 1 to 30 wt% with respect to 100 parts by weight of the (meth)acrylic copolymer. When the third structural unit is included in an amount of less than 1 wt%, the effect of improving adhesion and heat resistance may be insufficient, and when the third structural unit is included in an amount of more than 30 wt%, a low molecular weight polymer may be obtained or a polymerization conversion rate may be reduced.

In the present disclosure, in addition to the third structural unit derived from (acet)amides, the first structural unit derived from (meth)acrylonitrile and the second structural unit derived from (meth)acrylic acid or (meth)acrylate are included in the binder copolymer in a controlled weight ratio.

Since (meth)acrylonitrile has higher glass transition temperature and melting point than (meth)acrylic acid, when the structural unit derived from (meth)acrylonitrile is used, the heat resistance of the separator may be greatly improved, and (meth)acrylic acid may exhibit higher adhesive performance than (meth)acrylonitrile by improving hydrogen bonds or ionic bonds with an inorganic material by a carboxyl group and affinity with a substrate. Accordingly, in the present disclosure, the first structural unit derived from (meth)acrylonitrile and the second structural unit derived from (meth)acrylic acid or (meth)acrylate are included in the binder copolymer in a controlled weight ratio.

According to an exemplary embodiment of the present disclosure, the first structural unit derived from (meth)acrylonitrile is included in an amount of 30 to 70 wt% with respect to 100 parts by weight of the (meth)acrylic copolymer, and the second structural unit derived from (meth)acrylic acid or (meth)acrylate is preferably included in an amount of 30 to 70 wt% with respect to 100 parts by weight of the (meth) acrylic copolymer. When the content of the first structural unit derived from (meth)acrylonitrile is less than 30 wt%, the adhesion is good, but the heat resistance improvement effect due to the use of (meth)acrylonitrile may be insufficient.

The copolymer used as the binder used for the present disclosure may also contain monomers copolymerizable with these monomers, in addition to the monomers. Examples of other copolymerizable monomers may include styrene-based monomers, olefins, diene-based monomers, halogen atom-containing monomers, vinyl acetate, vinyl esters, vinyl ethers, vinyl ketones, heterocyclic vinyl compounds, and amide-based monomers.

The (meth)acrylic copolymer may be in various forms, such as an alternating polymer in which the units are alternately distributed, a random polymer in which the units are randomly distributed, or a graft polymer in which some structural units are grafted.

The (meth)acrylic copolymer may have a weight average molecular weight of 150,000 to 950,000, preferably 200,000 to 600,000. When the weight average molecular weight of the (meth)acrylic copolymer satisfies the above range, the (meth)acrylic copolymer and the separator including the (meth)acrylic copolymer may exhibit excellent adhesion, heat resistance and air permeability. The weight average molecular weight may be a PEO conversion average molecular weight measured using gel filtration chromatography.

The (meth)acrylic copolymer may be prepared by various known methods, such as emulsion polymerization, suspension polymerization, bulk polymerization, solution polymerization, or bulk polymerization.

Examples of a polymerization initiator used for polymerization may include organic peroxides such as lauroyl peroxide, diisopropyl peroxydicarbonate, di-2-ethylhexyl peroxydicarbonate, t-butylperoxypivalate, and 3,3,5-trimethylhexanoyl peroxide, azo compounds such as α,α'- azobisisobutyronitrile, or ammonium persulfate, potassium persulfate, etc.

The polymerization reaction temperature may be 50°C to 90°C.

The (meth)acrylic copolymer may be formed by polymerization of 30 to 70 wt% of the first structural unit derived from (meth)acrylonitrile; 30 to 70 wt% of the second structural unit derived from (meth)acrylic acid or (meth)acrylate; and 1 to 30 wt% of the third structural unit derived from (acet)amides. The acrylic copolymer formed by polymerization of the three kinds of monomers in the content ratio has improved adhesion and heat resistance to the porous substrate, thereby greatly improving heat resistance properties when applied to the separator.

Metal hydroxide may be used to adjust the pH of the polymer. Preferably, NaOH or LiOH may be used as the metal hydroxide.

Another exemplary embodiment of the present disclosure provides a slurry for coating a porous film containing the binder formed by containing the (meth)acrylic copolymer, inorganic particles and a solvent.

When the inorganic particles are included in the coating layer, it is possible to suppress a short circuit between the positive electrode and the negative electrode by further preventing the shrinkage of the separator due to heat, and it is also possible to improve the performance of the battery by minimizing the resistance of lithium ions.

The inorganic particles may include SiO₂, alumina (Al₂O₃), Al(OH)₃, AlO(OH), TiO₂, BaTiO₃, Mg(OH)₂, MgO, Ti(OH)₄, clay, glass powder, or combinations thereof.

The inorganic particles are preferably mixed with the (meth)acrylic copolymer in a ratio (solid content ratio) of 15 to 35:65 to 85.

Both water and an organic solvent may be used as the solvent. The amount of the solvent is adjusted so that the concentration of the solid content is preferably 5 to 90 wt%, more preferably 10 to 50 wt%.

A mixing device for the slurry is not particularly limited as long as the device is a device capable of uniformly mixing the components, and may use a ball mill, a sand mill, a pigment disperser, a meat mill, an ultrasonic disperser, a homogenizer, a planetary mixer, etc., but particularly preferably use a high dispersion device, such as a bead mill, a roll mill, a fill mix, etc., capable of adding a high dispersion shear.

### <Preparation of inorganic material-coated separator>

Another exemplary embodiment of the present disclosure provides a separator for a secondary battery including a porous substrate; and a coating layer positioned on at least one surface of the porous substrate, in which the coating layer includes a (meth)acrylic copolymer containing a first structural unit derived from (meth)acrylonitrile; a second structural unit derived from (meth)acrylic acid or (meth)acrylate; and a third structural unit derived from (acet)amides.

The separator for the secondary battery separates a negative electrode and a positive electrode and provides a moving passage for lithium ions, and may include a porous substrate and a coating layer positioned on at least one surface of the porous substrate.

The porous substrate may have a plurality of pores and may be a substrate commonly used in electrochemical devices. The porous substrate may be non-limitedly a polymer film formed of any one polymer selected from the group consisting of polyolefin such as polyethylene and polypropylene, polyester such as polyethylene terephthalate and polybutylene terephthalate, polyacetal, polyamide, polyimide, polycarbonate, polyether ether ketone, polyaryl ether ketone, polyether imide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more of these polymers.

The porous substrate may have a thickness of about 1 µm to 40 µm, for example, 1 µm to 30 µm, 1 µm to 20 µm, 5 µm to 15 µm, or 10 µm to 15 µm.

The coating layer may include, as a binder, a (meth)acrylic copolymer containing a first structural unit derived from (meth)acrylonitrile; a second structural unit derived from (meth)acrylic acid or (meth)acrylate; and a third structural unit derived from (acet)amides. When the (meth)acrylic copolymer is used as the binder when forming the coating layer on the substrate, heat resistance properties of the separator may be improved by improving adhesion and heat resistance to the porous substrate.

The coating layer may be positioned on one surface of the substrate by applying the slurry for coating the porous film on the porous substrate.

The slurry for coating the porous film is the same as described above.

A method of applying the slurry for coating the porous film on the porous substrate is not particularly limited. For example, dip coating, die coating, gravure coating, comma coating, etc. may be used.

For example, the drying method may include drying using warm air, hot air, and low humidity air, vacuum drying, and drying using irradiation of (far-)infrared rays and electron beams. The drying temperature changes depending on a type of solvent used. Water or an aqueous alcohol solution may be used as the solvent.

The drying temperature range is preferably 60°C to 120°C.

The thickness of the coating layer is preferably 1 to 6 µm. If the thickness is less than 1 µm, there is a problem in that the heat resistance properties of the separator are significantly reduced, and if the thickness exceeds 6 µm, the thickness of the separator is too thick, which may cause a decrease in energy density of the battery and an increase in resistance.

The coating layer may further include a dispersant, and the dispersant may include an acrylic compound different from the (meth)acrylic copolymer.

Another exemplary embodiment of the present disclosure provides a secondary battery including the separator for the secondary battery.

The secondary battery may include a positive electrode, a negative electrode, an electrolyte, and the separator for the secondary battery.

The secondary battery may be a lithium ion secondary battery.

Hereinafter, the present disclosure will be described with reference to Examples. However, the present disclosure is not limited thereto. In addition, unless otherwise indicated, parts and % in this Example are based on a weight.

### <Preparation Examples>

### Preparation of binder

600 parts by weight of distilled water and 5 to 20 parts by weight of metal hydroxide NaOH or LiOH with respect to 100 parts by weight of a monomer mixture were put into a reaction container, stirred, and then the temperature was raised to 60°C while injecting high-purity nitrogen gas. 0.3 parts by weight of ammonium persulfate as a decomposition initiator with respect to 100 parts by weight of the monomer mixture was added and then solution polymerization was performed at 60°C for 8 hours. Then, the monomer mixture was cooled at room temperature to prepare an acrylic copolymer (polymer A).

### Preparation of slurry for coating porous film

Alumina (average particle diameter of 0.5 µm) as inorganic particles, and a polymer A were mixed to be 85:15 (solid content ratio), and further added and mixed with distilled water so that the solid content concentration became 24%. The mixture was sufficiently dispersed through a ball mill to prepare a slurry.

### Preparation of inorganic material-coated separator

The slurry prepared on one surface of a polyethylene porous substrate was applied by a comma coating method to form a coating layer having a thickness of 6 µm, and then dried with hot air at a temperature of 60 to 85°C to prepare an inorganic material-coated separator.

### <Example 1>

Except for using a monomer mixture of 52 parts by weight of (meth)acrylonitrile, 43 parts by weight of (meth)acrylic acid, and 5 parts by weight of (acet)amide as the monomer mixture, a binder and a separator for a secondary battery were prepared using the same method as in Preparation Example.

### <Example 2>

Except for using a monomer mixture of 45 parts by weight of (meth)acrylonitrile, 40 parts by weight of (meth)acrylic acid, and 15 parts by weight of (acet)amide as the monomer mixture, a binder and a separator for a secondary battery were prepared using the same method as in Preparation Example.

### <Example 3>

Except for using a monomer mixture of 40 parts by weight of (meth)acrylonitrile, 30 parts by weight of (meth)acrylic acid, and 30 parts by weight of (acet)amide as the monomer mixture, a binder and a separator for a secondary battery were prepared using the same method as in Preparation Example.

### <Comparative Example 1>

Except for using a monomer mixture of 60 parts by weight of (meth)acrylonitrile and 40 parts by weight of (meth)acrylic acid as the monomer mixture, a binder and a separator for a secondary battery were prepared using the same method as in Preparation Example.

### <Comparative Example 2>

Except for using a monomer mixture of 59 parts by weight of (meth)acrylonitrile, 39 parts by weight of (meth)acrylic acid, and 2 parts by weight of polyvinyl alcohol as the monomer mixture, a binder and a separator for a secondary battery were prepared using the same method as in Preparation Example.

### <Comparative Example 3>

Except for using a monomer mixture of 20 parts by weight of (meth)acrylonitrile and 80 parts by weight of (meth)acrylic acid as the monomer mixture, a binder and a separator for a secondary battery were prepared using the same method as in Preparation Example.

### <Comparative Example 4>

Except for using a monomer mixture of 10 parts by weight of (meth)acrylonitrile, 85 parts by weight of (meth)acrylic acid, and 5 parts by weight of (acet)amide as the monomer mixture, a binder and a separator for a secondary battery were prepared using the same method as in Preparation Example.

**[Table 1]**

| Monomer component and weight ratio | | | | |
|---|---|---|---|---|
| Classification | Acrylonitrile | Acrylic acid | (Acet) amide | Polyvinyl alcohol |
| Example 1 | 52 | 43 | 5 | 0 |
| Example 2 | 45 | 40 | 15 | 0 |
| Example 3 | 40 | 30 | 30 | 0 |
| Comparative Example 1 | 60 | 40 | 0 | 0 |
| Comparative Example 2 | 59 | 39 | 0 | 2 |
| Comparative Example 3 | 20 | 80 | 0 | 0 |
| Comparative Example 4 | 10 | 85 | 5 | 0 |

### <Experimental Example 1> Adhesion test

Specimens were prepared by cutting the separators prepared in Examples 1 to 3 and Comparative Examples 1 to 4 with sizes of a width of 18 mm and a length of 100 mm. A double-sided tape with a width of 20 mm and a length of 40 mm was attached to an acryl plate with an area of 40 mm in width and 100 mm in length. The prepared separator was attached on the double-sided tape, and then lightly pressed 5 times with a hand roller. The specimens were mounted on a UTM (20 kgf load cell), and one part of the separator was fixed to an upper clip of a tensile strength machine, and a tape attached to one surface of the separator was fixed to a lower clip, and 180° peel strength was measured at a speed of 100 mm/min. Five or more specimens per sample were prepared and measured, the average value thereof was calculated, and the results were shown in Table 2 below.

### <Experimental Example 2> Heat resistance test

The separators prepared in Examples 1 to 3 and Comparative Examples 1 to 4 were cut to have horizontal and vertical sizes of 3 x 5 cm to prepare specimens, the specimens were left in an oven at 150°C for 1 hour, and then a shrinkage rate was measured, and the results were shown in Table 2 below.

**[Table 2]**

| Adhesion and heat shrinkage rate of separator | | | | | | | | | |
|---|---|---|---|---|---|---|---|---|---|
| Classification | | Ex. 1 | Ex. 2 | Ex. 3 | Com. Ex. 1 | Com. Ex. 2 | Com. Ex. 3 | Com. Ex. 4 | |
| Thickness | (µm) | 6 | 6 | 6 | 6 | 6 | 6 | 6 | |
| Adhesion | Average value (gf/18mm) | 42 | 58 | 67 | 38 | 43 | 48 | 52 | |
| | Standard deviation | 0.23 | 0.31 | 0.27 | 0.39 | 0.50 | 0.41 | 0.30 | |
| Heat shrinkage rate | 150°C, 1 hr | MD (%) | 12 | 9 | 7 | 12 | 12 | 13 | 13 |

In Table 2 above, when the separators of Examples 1 to 3 according to the present disclosure were compared with the separator of Comparative Example 1 without containing (acet)amide and the separator of Comparative Example 2 containing polyvinyl alcohol without containing (acet)amide, the average value of the adhesion was high, the standard deviation was small, and the heat shrinkage rate was equal or higher.

In addition, in Examples 1 to 3, it could be seen that the (acet)amide content was increased, the adhesion and heat resistance performance were increased. From this, it could be seen that when (acet)amide was included as a component of the acrylic copolymer like the present disclosure, adhesion and heat resistance performance may be improved even without mixing a polyvinyl alcohol-based polymer like the related art.

In addition, it could be seen that the separators of Examples 1 to 3 had adhesion and heat resistance equal or greater than those of the separator of Comparative Example 3 containing 20 wt% of the content of (meth)acrylonitrile, and the separator of Comparative Example 4 containing 10 wt% of the content of (meth)acrylonitrile, respectively. In particular, it can be seen that since the separator of Comparative Example 4 has a small content of (meth)acrylonitrile, although (acet)amide is contained, the adhesion is good, but the heat resistance properties are not expressed. Accordingly, it can be seen that only when (meth)acrylonitrile is included in the copolymer in an amount of 30 wt% or more like the present disclosure, both adhesion and heat resistance performance can be expressed.

## Claims

1. A binder for coating a secondary battery separator comprising:
a (meth)acrylic copolymer containing a first structural unit derived from (meth)acrylonitrile; a second structural unit derived from (meth)acrylic acid or (meth)acrylate; and a third structural unit derived from (acet)amides.

2. The binder for coating the secondary battery separator of claim 1, wherein the third structural unit derived from the (acet)amides is included in an amount of 1 to 30 wt% with respect to 100 parts by weight of the (meth)acrylic copolymer.

3. The binder for coating the secondary battery separator of claim 1, wherein the first structural unit derived from the (meth)acrylonitrile is included in an amount of 30 to 70 wt% with respect to 100 parts by weight of the (meth)acrylic copolymer and the second structural unit derived from the (meth)acrylic acid or (meth)acrylate is included in an amount of 30 to 70 wt% with respect to 100 parts by weight of the (meth)acrylic copolymer.

4. A separator for a secondary battery comprising:
a porous substrate; and
a coating layer positioned on at least one surface of the porous substrate,
wherein the coating layer includes a (meth)acrylic copolymer containing a first structural unit derived from (meth)acrylonitrile; a second structural unit derived from (meth)acrylic acid or (meth)acrylate; and a third structural unit derived from (acet)amides.

5. The separator for the secondary battery of claim 4, wherein the porous substrate is a polymer film formed of any one polymer selected from the group consisting of polyolefin, polyester, polyacetal, polyamide, polyimide, polycarbonate, polyether ether ketone, polyaryl ether ketone, polyether imide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more of these polymers.

6. The separator for the secondary battery of claim 4, wherein the coating layer is formed by applying a slurry for coating a porous film on the porous substrate.

7. The separator for the secondary battery of claim 6, wherein the slurry for coating the porous film contains the binder formed by containing the (meth)acrylic copolymer, inorganic particles and a solvent.

8. The separator for the secondary battery of claim 7, wherein the inorganic particles include SiO₂, alumina (Al₂O₃), Al(OH)₃, AlO(OH), TiO₂, BaTiO₃, Mg(OH)₂, MgO, Ti(OH)₄, clay, glass powder, or combinations thereof.

9. The separator for the secondary battery of claim 7, wherein the inorganic particles are mixed with the (meth)acrylic copolymer in a ratio (solid content ratio) of 15 to 35:65 to 85.

10. The separator for the secondary battery of claim 4, wherein the thickness of the coating layer is 1 to 6 µm.

11. A secondary battery comprising the separator for the secondary battery of any one of claims 4 to 10.
